# EUROPÄISCHE PATENTANMELDUNG

(11) **EP 1 058 338 A2**
(43) Veröffentlichungstag der Anmeldung: **06.12.2000**
(21) Anmeldenummer: 00109481.2
(22) Anmeldetag: 04.05.2000
(51) Int. Cl.: H01Q 1/32, H01Q 1/36, H01Q 1/38

(54) **Antennenanordnung in Kraftfahrzeugen**

(30) Priorität: 02.06.1999 DE 19925127
(71) Anmelder: DaimlerChrysler AG, 70567 Stuttgart (DE)
(72) Erfinder: Reinhardt, Matthias, 71364 Winnenden (DE); Hüls, Helmut, 71409 Schwaikheim (DE); Ruther, Markus, 73760 Ostfildern (DE)

(57) **Zusammenfassung**

Für eine Antennenanordnung in einem Kraftfahrzeug, insbesondere als Antenne einer funkfernsteuerbaren Verriegelungsanlage, wird eine Antennenfläche vorzugsweise im Bereich einer Fensteröffnung des Fahrzeugs, insbesondere bei der Frontscheibe mit einer einem Karosserieteil zugewandten Flächenkante angeordnet. Das Karosserieteil wirkt als Massefläche für die HP-Signale. Die Antennenanordnung ist einfach aufgebaut und vorteilhaft mit anderen Funktionseinheiten kombinierbar.

## Beschreibung

Die Erfindung betrifft eine Antennenanordnung in Kraftfahrzeugen.

Antennenanordnungen in Kraftfahrzeugen sind für unterschiedliche Einsatzfälle bekannt. Beispielsweise ist aus Funkschau 2/95, S. 60 - 62 eine Kombiantenne bekannt, bei welcher eine erste Antenne als Ringspaltantenne für ein Mobilfunknetz zwischen einer Karosserieaussparung und einer darin isoliert eingesetzten Leiterfläche ausgebildet ist und auf der Leiterfläche zugleich eine Flächenantenne für ein Satellitennavigationssystem angeordnet ist. Bekannt sind ferner kurze aktive Stabantennen und Scheibenantennen mit langgestreckten Leiterbahnen entlang von Scheibenrändern sowie die Ausnutzung von entlang von Kabelsätzen liegenden Leitungsabschnitten.

In der DE 42 20 654 A1 ist eine Mobilfunkantenne eines Fahrzeugs bekannt, bei welcher auf einer Fensterfläche eine annähernd quadratische Antennenfläche aufgebracht ist, welche mit einer Flächenkante einer gleichfalls isoliert auf der Scheibe aufgebrachten Massefläche in geringem Abstand gegenübersteht. Die Antennenfläche und die Massefläche sind mit dem Innenleiter bzw. dem Außenleiter einer zum Mobilfunkempfänger führenden Koaxialleitung verbunden.

Die DE 197 35 395 A1 beschreibt eine Rundfunkantenne eines Fahrzeugs, bei welcher auf eine Fensterscheibenfläche eine Elektrode aus hoch leitfähigem Material aufgebracht ist, welche hochfrequent an eine begrenzt leitfähige Fläche aus durchsichtigem Material angekopppelt ist. Die Elektrode ist, ggf. unter Einfügen eines Hochfrequenzverstärkers über eine HF-Leitung an den Radioempfänger angeschlossen.

Aus der DE 297 13 582 U1 ist eine Anordnung zum Verarbeiten von Informationen in einem Kraftfahrzeug bekannt, bei welcher unter einem Teil der Scheibenfläche am Übergang zur Dachfläche ein Dachmodul angebracht ist, in welchem Komponenten verschiedener Systeme, insbesondere eine Satellitenempfangsantenne und optische Sensoren als Tageslichtdetektor, Sonnenstandsdetektor und/oder Regensensor untergebracht sein können.

Der vorliegenden Erfindung liegt die Aufgabe zugrunde, eine einfache und kostengünstig realisierbare und in dem Fahrzeugaufbau integrierbare Antennenanordnung anzugeben.

Die Erfindung ist im Patentanspruch 1 beschrieben. Die Unteransprüche enthalten vorteilhafte Ausgestaltungen und Weiterbildungen der Erfindung.

Die Erfindung zeichnet sich durch ein kompaktes Antennenelement in Form einer leitenden Antennenfläche aus, welche von einer auf einem Bezugspotential für die Hochfrequenzsignale liegenden Massefläche isoliert und gering beabstandet ist, wobei die vorzugsweise im wesentlichen ebene Antennenfläche der Massefläche eine Flächenkante zuweist, welche im folgenden als aktive Flächenkante bezeichnet ist, im übrigen aber von der Massefläche weg gerichtet ist und dieser insbesondere nicht flächig gegenüberliegt. Die Massefläche ist durch einen Teil der Fahrzeugkarosserie gebildet.

Der mit der Antennenfläche über eine Verbindungsleitung verbundene Hochfrequenzempfänger ist in geringer Entfernung von der Antennenfläche angeordnet, wodurch sich eine kurze Verbindungsleitung realisieren läßt, welche nicht spezielle Hochfrequenzeigenschaften wie beispielsweise eine Koaxialleitung aufweisen muß. Der Empfänger ist für Hochfrequenz einseitig mit der Massefläche gekoppelt.

Die Antennenfläche kann vorteilhafterweise als dünne leitende Schicht auf einer dielektrischen Trägerfläche aufgebracht, beispielsweise aufgeklebt oder als Film abgeschieden sein. Die Antennenfläche braucht nicht streng eben zu sein, so daß eine große Auswahl geeigneter Flächen am Fahrzeug zur Verfügung steht.

Vorteilhafterweise ist die Antennenfläche im Bereich von Fensteröffnungen der Fahrzeugkarosserie, insbesondere im Heckfenster oder bevorzugt im Frontfensterbereich positioniert. Als dielektrischer Träger kann beispielsweise die Scheibenoberfläche selbst oder gemäß einer anderen vorteilhaften Ausführungsform ein dielektrisches Gehäuseteil einer von der Antennenanordnung unabhängigen Funktionseinheit dienen. Letztere wird dadurch vorteilhafterweise ohne die Notwendigkeit eines zusätzlichen Trägers auch für die Antennenfläche ausgenutzt. Bei Anordnung der Antennenfläche auf einer Scheibenfläche in deren Randbereich wird die Antennenfläche vorteilhafterweise durch eine Blende abgedeckt, wobei vorzugsweise wieder eine Position bei einer weiteren Funktionseinheit gewählt ist und eine gemeinsame Abdeckung für die Antennenfläche und die weitere Funktionseinheit vorgesehen ist.

Die weitere Funktionseinheit kann gemäß einer besonders vorteilhaften Ausführung ein in einem oberen Bereich der Frontscheibe angeordneter optischer Regensensor sein.

Die Anordnung der Antennenfläche in einem oberen Randbereich einer Fensteröffnung hat den weiteren Vorteil einer besonders geringen Abschirmung und Abschattung durch leitende Karosserieteile, so daß günstigerweise von allen Seiten eine gute Erreichbarkeit durch einen tragbaren Funksender, insbesondere einen Funkschlüsssel für eine über Funk fernbetätigbare Verriegelungsanlage gegeben ist.

Der Empfänger ist für Hochfrequenz einseitig mit der Massefläche vorzugsweise ohne unmittelbaren galvanischen Kontakt mit dieser kurzgeschlossen, beispielsweise indem die Empfängerbaugruppe in geringem Abstand zur Karosserie angeordnet und kapazitiv und/oder induktiv an die Massefläche bzw. das an dieser anliegende Bezugspotential gekoppelt ist. Auch hierfür zeichnet sich die Positionierung der Antennenfläche in einem oberen Bereich einer Fensteröffnung besonders vorteilhaft aus, da die Dachfläche als Massefläche besonders geeignet ist und die Empfängerbaugruppe einfach und unauffällig in der Innenverkleidung der Dachfläche und/oder in einer häufig vorhandenen zusätzlichen Funktionsgruppe unter dem Fahrzeugdach in der Nähe der Frontscheibe wie beispielsweise eine Deckenleuchte, eine Dachbedieneinheit etc. integriebar ist. Auch über Einkopplungen in einen Kabelbaum kann ein Beitrag zur Masseankopplung des Empfängers für HF-Signale erfolgen.

Die Antennenfläche ist in einer bevorzugten Ausführungsform annähernd rechteckig und mit ihrer aktiven Flächenkante parallel zu einer in geringem Abstand gegenüberstehenden im wesentlichen geraden Kante einer Massefläche, insbesondere eines Karosserieblechs. Der Abstand, bei nicht geraden oder nicht parallelen Kanten der minimale Abstand zwischen aktiver Flächenkante und Gegenkante der Massefläche ist vorzugsweise größer als 0,005 λ, insbesondere größer als 0,01 λ und vorzugsweise kleiner als 0,05 λ, insbesondere kleiner als 0,025 λ mit λ als Betriebswellenlänge der Antennenanordnung. Die Abmessung der Antennenfläche in einer zur kürzesten Verbindung von aktiver Flächenkante der Antennenfläche und Gegenkante der Massefläche parallelen Richtung ist vorzugsweise größer als 0,02 λ, insbesondere größer als 0,04 λ und vorzugsweise kleiner als 0,2 λ, insbesondere kleiner als 0,1 λ. In einer dazu senkrechten Richtung, bei parallelen, gegenüberstehenden Kanten von Antennenfläche und Massefläche also insbesondere in einer zu diesen Kanten parallelen Richtung gelten im wesentlichen dieselben Maße für vorteilhafte Abmessungen der Antennenfläche wie für die vorstehend beschriebene Richtung. Das Verhältnis der Querabmessungen der Antennenfläche in den beiden genannten Richtungen liegt vorteilhafterweise zwischen 0,2 und 5.

Die Antennenanordnung ist vorzugsweise in einem Funksystem mit einer Betriebswellenlänge zwischen 0,2 m und 2 m eingesetzt. Die Antennenanordnung ist insbesondere vorteilhaft einsetzbar bei einer funkbetätigbaren Verriegelungsanlage mit einem Funkschlüssel als tragbaren Sender.

Die Antennenfläche ist in einer ersten bevorzugten Ausführungsform als durchgehende, einheitliche, leitende Fläche ausgebildet. Die Funktion bleibt aber auch erhalten, wenn die Fläche unterbrochen ist, beispielsweise Gitterform aufweist, solange die Weite der Öffnungen sehr klein ist gegen die Betriebswellenlänge. Die Antennenfläche kann auch in anderer Weise, beispielsweise in Spiralform oder in Form getrennter kantenparalleler Streifen strukturiert sein, solange die Abstände zwischen getrennten Abschnitten in einer zur kürzesten Verbindung von aktiver Flächenkante und Gegenkante der Massefläche parallelen Richtung sehr klein sind und die Antennenimpedanz nicht unzulässig beeinträchtigen. Eine Strukturierung der Antennenfläche kann u. U. zur Impedanzeinstellung herangezogen werden.

Eine andere besonders vorteilhafte Maßnahme zur Einstellung einer gewünschten Impedanz, insbesondere zur Impedanzanpassung zwischen Antennenfläche und Empfängereingang sieht vor, zwischen Antennenfläche und Empfängereingang Blindleistungselemente zur Impedanzbeeinflussung einzufügen. Gemäß einer bevorzugten Ausführung hierfür sind derartige Blindleistungselemente als leitende Flächenstrukturen zwischen Antennenfläche und Verbindungsleitung zum Empfänger ausgeführt.

Die Verbindungsleitung ist vorteilhafterweise in einen gegen die Mitte des Flächenelements in Richtung der Massefläche versetzten Abschnitt, vorzugsweise bei der aktiven Flächenkante, ggf. unter Zwischenschaltung der genannten Flächenstrukturen der Blindleistungselemente, angeschlossen.

Die Länge der Verbindungsleitung ist vorteilhafterweise klein gegen die Betriebswellenlänge und ist vorzugsweise kürzer als 0,5 λ, insbesondere kürzer als 0,25 λ.

Die Erfindung ist nachfolgend anhand bevorzugter Ausführungsbeispiele unter Bezugnahme auf die Abbildungen noch eingehend veranschaulicht. Dabei zeigt
Fig. 1 ein Fahrzeug mit bevorzugter Position der Antennenfläche.
Fig. 2 eine besonders vorteilhafte Antennenanordnung.
Fig. 3 eine schematische Skizze zu bevorzugten geometrischen Verhältnissen.
Fig. 4 Antennenflächen mit Blindleistungselementen in Form von Leiterflächenstrukturen.
Fig. 5 Antennendiagramme für verschiedene Antennenanordnungen.

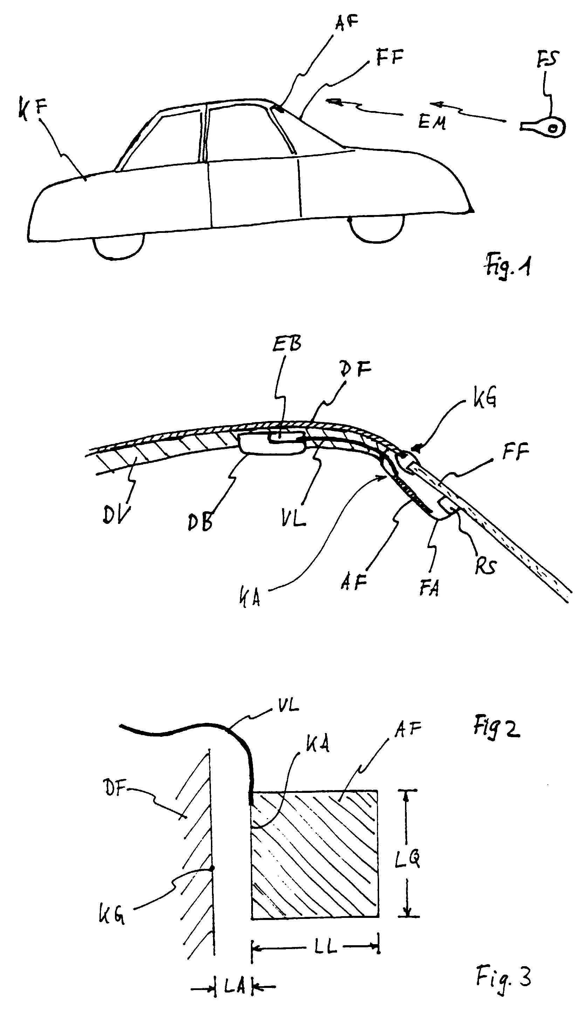

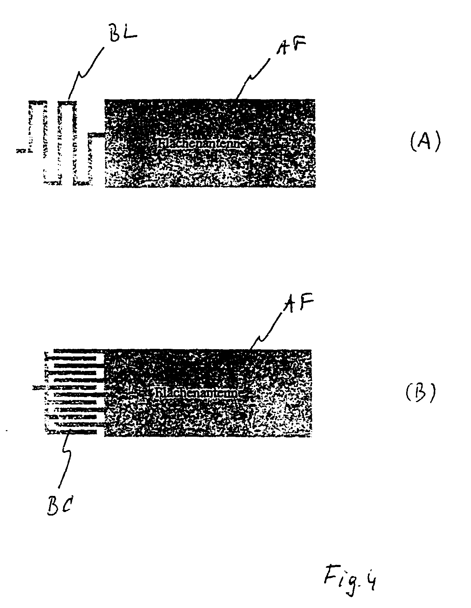

Fig. 1 zeigt den bevorzugten Einsatzfall einer erfindungsgemäßen Antennenanordnung in einer funkfernsteuerbaren Verriegelungsanlage eines Kraftfahrzeugs KF. Als tragbarer Sender für derartige, an sich gebräuchliche Systeme dient ein Fahrzeugschlüssel (Funkschlüssel) FS, in welchen ein Funksender geringer Leistung integriert ist, welcher über ein Betätigungselement aktivierbar und aus einem gleichfalls integrierten Energiespeicher gespeist ist. Für derartige Funkschließanlagen ist im Regelfall eine Funkreichweite in der Größenordnung von 10 m ausreichend. Typischerweise wird der Sender in noch geringeren Entfernungen zum Fahrzeug aktiviert. Das elektromagnetische HF-Feld EM des Funkschlüssels wird von der fahrzeugseitigen Antennenanordnung aufgenommen und in einer Empfängeranordnung demoduliert und in Steuersignale zur Betätigung der Verriegelungsanlage umgesetzt. Die für die fahrzeugseitige Antennenanordnung vorgesehene Antennenfläche AF ist bevorzugt im oberen Randbereich der Frontscheibe FF positioniert wie in Fig. 1 skizziert.

Die Fig. 2 zeigt einen Ausschnitt einer besonders vorteilhaften Anordnung, bei welcher die Antennenfläche AF der Antennenanordnung an der Innenfläche der Abdeckung FA einer von der Funkschließanlage im Prinzip unabhängigen Funktionseinheit, beispielsweise eines Regensensors RS angebracht, beispielsweise als metallische oder metallbeschichtete Folie aufgeklebt oder als metallische Beschichtung abgeschieden ist.

Der Empfänger EB ist mit der Antennenfläche AF über eine Verbindungsleitung VL verbunden, welche als einadrige Leitung, beispielsweise als flexible Litzenleitung ausgeführt sein kann. Der Gegenpol für die HF-Antennensignale ist vorteilhafterweise dadurch gegeben, daß der Empfänger mit sehr geringem Abstand der als Massefläche der Antennenanordnung wirkenden metallischen Dachfläche DF gegenübersteht. Durch kapazitive und/oder induktive Wechselwirkung ergibt sich eine enge Ankopplung des Empfängers EB an die Massefläche DF. Hierdurch kann auf eine zusätzliche direkte galvanische Masseverbindung mit der Massefläche verzichtet werden. Die Masseverbindung über den Kabelbaum des Fahrzeugs ist im Regelfall nicht HF-tauglich.

Die Empfängerbaugruppe kann in die Deckenverkleidung DV, innerhalb derer auch die Verbindungsleitung VL geführt ist, versenkt werden und kann insbesondere mit weiteren Baugruppen wie Deckenleuchte, Dachbedieneinheit DB etc. vorteilhaft baulich vereinigt sein, so daß auch die für diese weiteren Baugruppen vorhandenen Kabelstränge die Zuleitungen zur Empfängerbaugruppe mit aufnehmen können.

Die der als HF-Massefläche dienenden Dachfläche zugewandte aktive Flächenkante KA der Antennenfläche AF weist zu der ihr gegenüberstehenden Gegenkante KG der Dachfläche DF einen geringen Abstand auf, der bei einer Betriebswellenlänge der Funkschließanlage von ca. 1 m beispielsweise bei 1 - 2 cm liegt und in der schematischen Skizze der Fig. 3 mit LA bezeichnet ist. Die Antennenfläche ist im übrigen Verlauf stumpfwinklig, vorzugsweise annähernd diametral von der Massefläche weg geführt.

Die Abmessungen der Antennenfläche sind vorzugsweise in der bereits beschriebenen Art in Abhängigkeit von der Betriebswellenlänge gewählt und betragen bei dem Beispiel mit einer Betriebswellenlänge λ = 1 m in einer zur kürzesten Verbindung von aktiver Flächenkante KA und Gegenkante KG parallelen Richtung beispielsweise LL = 5 cm und in der dazu senkrechten Richtung ebenfalls LQ = 5 cm. Im in Fig. 3 skizzierten Beispiel ist die Antennenfläche AF als rechteckig mit zur geraden Gegenkante KG paralleler aktiver Kante KA ausgeführt. Abweichungen hiervon sind in vielfacher Form möglich, wie bereits erwähnt. Die Verbindungsleitung ist im skizzierten Beispiel bei der aktiven Kante KA an die Antennenfläche angeschlossen. Auch ein Leitungsanschluß innerhalb der Fläche ist möglich.

Bei den in Fig. 4 (A) und (B) skizzierten Ausführungsformen von Antennenflächen AF41. bzw. AF42 sind die Abmessungen LL > LQ gewählt. An die Antennenflächen sind in Verlängerung von der aktiven Kante KA als Blindleistungselemente für die HF-Signale wirkende Flächenstrukturen in Form einer induktiv wirkenden gewundenen Leitung BL (Fig. 4 (A)) oder einer kapazitiv wirkenden Interdigitalstruktur BC (Fig. 4 (B)) angefügt. Mittels der Blindleistungselemente ist insbesondere eine Impedanzanpassung zwischen Antennenanordnung und Empfängereingang möglich.

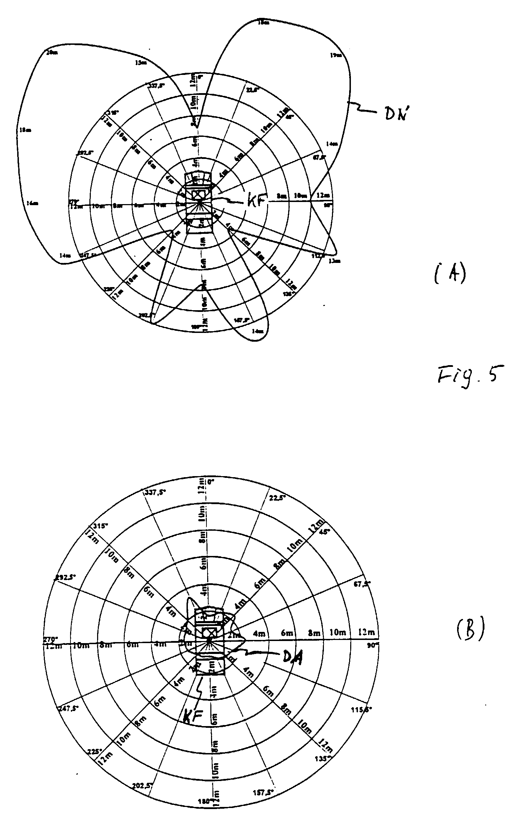

Die Fig. 5 (A) zeigt ein polares Reichweitendiagramm einer erfindungsgemäß aufgebauten Antennenanordnung für eine funkfernsteuerbare Verriegelungsanlage eines Kraftfahrzeugs KF, welches zum anschaulichen Vergleich der erzielten Reichweiten mit dargestellt ist. Die Antennenfläche ist dabei mittig im oberen Randbereich der Frontscheibe auf dem dielektrischen Gehäuse einer Regensensoreinrichtung angeordnet und über eine 25 cm lange einadrige Verbindungsleitung mit dem in der Deckenleuchte integrierten Empfänger verbunden. Es zeigen sich im Reichweitendiagramm zwar starke Reichweitenschwankungen, wobei die Reichweite aber immer deutlich über 3 m bleibt.

Im Vergleich dazu ist in Fig. 5 (B) ein Reichweitendiagramm skizziert, welches bei gleicher Sendeleistung des Funkschlüssels mit einer für Kraftfahrzeuge gebräuchlichen Kabelsatzantenne erzielt wurde, bei welcher als Antenne ein in ein Kabelbündel des Fahrzeug-Kabelbaums eingebundenes Litzenkabel dient. Die trotz des einfachen Aufbaus der erfindungsgemäßen Antenne erzielten Verbesserungen sind offensichtlich. Mit der erfindungsgemäßen Antennenanordnung ist es daher insbesondere auch möglich, bei Beibehaltung üblicher Reichweiten mit wesentlich geringeren Sendeleistungen auszukommen.

Die vorstehend und in den Ansprüchen angegebenen Merkmale sind sowohl einzeln als auch in verschiedenen Kombinationen vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Antennenanordnung für Kraftfahrzeuge mit einem Antennenelement, bei welchem eine mit einem Pol eines Empfängers über eine Verbindungsleitung verbundene elektrisch leitende Antennenfläche mit einer Flächenkante als aktiver Kante einer auf Bezugspotential liegenden Massefläche gegenübersteht und gegen diese isoliert ist und die Antennenfläche von der Massefläche weg gerichtet ist,
**dadurch gekennzeichnet,**
daß die Massefläche durch einen Teil der Fahrzeugkarosserie gebildet ist und der Empfänger in geringer Entfernung von der Antennenfläche angeordnet und einseitig für hochfrequente Signale der Betriebsfrequenz der Antennenanordnung mit der Massefläche gekoppelt ist.

2. Anordnung nach Anspruch 1,
**dadurch gekennzeichnet,**
daß die Antennenfläche im Randbereich einer Fensteröffnung des Fahrzeugs, insbesondere des Frontfensters positioniert ist.

3. Anordnung nach Anspruch 1 oder 2,
**dadurch gekennzeichnet,**
daß die aktive Flächenkante der Antennenfläche dem Fahrzeugdach als Massefläche zugewandt ist.

4. Anordnung nach einem der Ansprüche 1 bis 3,
**dadurch gekennzeichnet,**
daß eine dielektrische Fläche einer am Fahrzeug befestigten Funktionseinheit zusätzlich als Träger für die Antennenfläche dient.

5. Anordnung nach Anspruch 4,
**dadurch gekennzeichnet,**
daß die Funktionseinheit ein am Rand einer feststehenden Scheibe angeordneter Regensensor ist.

6. Anordnung nach einem der Ansprüche 1 bis 5,
**dadurch gekennzeichnet,**
daß die Länge der Verbindungsleitung kleiner ist als eine halbe Betriebs-Wellenlänge der Antennenanordnung.

7. Anordnung nach einem der Ansprüche 1 bis 6,
**dadurch gekennzeichnet,**
daß der Empfänger dicht an der Massefläche angeordnet und einseitig induktiv und/oder kapazitiv für hochfrequente Signale der Betriebsfrequenz der Antennenanordnung mit der Massefläche kurzgeschlossen ist.

8. Anordnung nach einem der Ansprüche 1 bis 7,
**dadurch gekennzeichnet,**
daß die Empfängerzuleitung in einem der Massefläche zugewandten Abschnitt der Antennenfläche angeschlossen ist.

9. Anordnung nach Anspruch 8,
**dadurch gekennzeichnet,**
daß die Empfängerzuleitung an der aktiven Kante der Flächenantenne angeschlossen ist.

10. Anordnung nach einem der Ansprüche 1 bis 9,
**dadurch gekennzeichnet,**
daß zwischen Antennenfläche und Empfänger Blindleistungselemente zur Impedanzanpassung eingefügt sind.

11. Anordnung nach Anspruch 10,
**dadurch gekennzeichnet,**
daß die Blindleistungselemente zwischen Antennenfläche und Empfängerzuleitung eingefügt sind.

12. Anordnung nach Anspruch 11,
**dadurch gekennzeichnet,**
daß die Blindleistungslemente als strukturierte leitende Flächen ausgebildet sind.

13. Anordnung nach Anspruch 12,
**dadurch gekennzeichnet,**
daß die Blindleistungselemente auf demselben dielektrischen Träger wie die Antennenfläche ausgebildet sind.

14. Anordnung nach einem der Ansprüche 1 bis 13,
**dadurch gekennzeichnet,**
daß die Antennenfläche in sich durch Flächenunterbrechungen strukturiert ist.

15. Anordnung nach einem der Ansprüche 1 bis 14,
**dadurch gekennzeichnet,**
daß der minimale Abstand zwischen aktiver Flächenkante der Antennenfläche und der Massefläche größer als 0,005 λ, insbesondere größer als 0,01 λ und kleiner als 0,05 λ, insbesondere kleiner als 0,025 λ mit λ als Betriebswellenlänge der Antennenanordnung ist.

16. Anordnung nach einem der Ansprüche 1 bis 15,
**dadurch gekennzeichnet,**
daß das Verhältnis der Flächenquerabmessungen der Antennenfläche in zwei senkrecht aufeinanderstehenden Richtungen zwischen 0,25 und 4 liegt.

17. Antennenanordnung nach einem der Ansprüche 1 bis 16,
**dadurch gekennzeichnet,**
daß sie Teil einer funkbetätigbaren Verriegelungsanlage mit einem Funkschlüssel ist.

18. Anordnung nach einem der Ansprüche 1 bis 17,
**dadurch gekennzeichnet,**
daß die Antenne mit einer Betriebswellenlänge zwischen 0,2 m und 2 m eingesetzt ist.

19. Anordnung nach einem der Ansprüche 1 bis 18,
**dadurch gekennzeichnet,**
daß sie Teil einer Funkfernsteuereinrichtung zur Ankopplung an ein Feld eines tragbaren Senders ist.
